Europäisches Patentamt

European Patent Office

Office européen des brevets

(19)

(11) **EP 0 745 212 B1**

(12) **EUROPÄISCHE PATENTSCHRIFT**

(45) Veröffentlichungstag und Bekanntmachung des Hinweises auf die Patenterteilung:
**12.05.1999 Patentblatt 1999/19**

(21) Anmeldenummer: **95942699.0**

(22) Anmeldetag: **19.12.1995**

(51) Int Cl.$^6$: **G01D 5/14**, F02D 41/24, G01P 13/00

(86) Internationale Anmeldenummer:
**PCT/EP95/05026**

(87) Internationale Veröffentlichungsnummer:
**WO 96/19712 (27.06.1996 Gazette 1996/29)**

(54) **VERFAHREN UND VORRICHTUNG ZUR ERFASSUNG DER WINKELPOSITION EINER ROTIERENDEN WELLE**

PROCESS AND DEVICE FOR DETERMINING THE ANGULAR POSITION OF A ROTATING SHAFT

PROCEDE ET DISPOSITIF PERMETTANT DE DETERMINER LA POSITION ANGULAIRE D'UN ARBRE EN ROTATION

(84) Benannte Vertragsstaaten:
**DE FR GB IT SE**

(30) Priorität: **20.12.1994 DE 4445378**

(43) Veröffentlichungstag der Anmeldung:
**04.12.1996 Patentblatt 1996/49**

(73) Patentinhaber: **AB Elektronik GmbH D-59368 Werne (DE)**

(72) Erfinder: **PAPE, Peter D-59192 Bergkamen (DE)**

(74) Vertreter: **Hoffmeister, Helmut, Dr. Dipl.-Phys. Patentanwalt Goldstrasse 36 48147 Münster (DE)**

(56) Entgegenhaltungen:
DE-A- 3 904 958          DE-A- 4 343 198
DE-B- 1 237 173          GB-A- 2 198 537
GB-A- 2 249 633

**Beschreibung**

Die Erfindung betrifft ein Verfahren und eine Vorrichtung zur Erfassung der Winkelposition einer rotierenden Welle. Dabei wird ein Hallsensor in einer geeigneten Hallzelle vor einem Impulsrad positioniert, das mit der Welle verbunden ist; das Impulsrad ist mit wenigstens einem Zahn, der eine ansteigende und eine abfallende Zahnflanke hat, und mit wenigstens einer Zahnlücke versehen. Die Hallzelle nimmt den zeitlichen Verlauf einer magnetischen Flußdichte auf, die durch das Impulsrad erzeugt wird, und gibt ein Hallspannungssignal ab. Das Hallspannungssignal wird in einer Ausgabeschaltung in ein differenziertes Signal umgewandelt; daraus wird eine Rechteckimpulsfolge erzeugt.

Ein Verfahren und eine Vorrichtung zur Erfassung der Position rotierender Wellen ist in der Patentanmeldung der Anmelderin mit dem älteren Zeitrang DE 43 43 198 vorgeschlagen worden. Vor einem Hallsensor mit zugeordnetem Magnet wird ein mit Zähnen versehenes Impulsrad mit einer Winkelgeschwindigkeit w bewegt. Durch den Hallsensor wird der zeitliche Verlauf einer magnetischen Flußdichte B durch das Impulsrad als Hallspannungsverlauf aufgenommen. In einer dynamischen Auswahlschaltung wird das aufgenommene Signal differenziert und aus dem differenzierten Signal in einer Wendepunkterkennungsschaltung ein dynamisches Ausgangssignal erzeugt, das die Zähne des Impulsrades quasi abbildet.

Nachteilig ist, daß durch die vorgenannte Ausgabeschaltung ein Meßsignal erst dann ausgegeben wird, wenn das Impulsrad eine bestimmte Umdrehungszahl pro Zeiteinheit erreicht hat. Die Winkelposition kann unterhalb dieser Mindest-Umdrehungszahl oder gar bei der Umdrehungszahl Null, die einem Stillstand des Rades entspricht, nicht festgestellt werden. Darüber hinaus besteht die Gefahr, daß sich dem Ausgangssignal Störungen überlagern können, die zu einer Verfälschung des Meßergebnisses führen.

Weiterhin ist aus der DE 42 09 212 A1 bekannt, im Bereich eines rotierenden Impulszahnrads mit Permanentmagnet einen Differenzial-Hallsensorkreis mit zwei Hallsensoren anzuordnen. Durch eine spezielle Teilung erzeugt das rotierende Zahnrad in den beiden Hallsensoren phasenverschobene Signale. Damit müssen zur Ermittlung der Stellung des Zahnrades mindestens zwei Zähne abgetastet werden. Dies erfordert ebenfalls eine relativ hohe Geschwindigkeit des Impulsrades.

Es stellt sich demnach die Aufgabe, ein Verfahren und eine Vorrichtung zur Erfassung der Winkelposition einer rotierenden Welle anzugeben, die eine Erfassung der Stellung der Welle, beginnend vom Stillstand bis zu höchstzulässigen Nenndrehzahlen, erlauben, wobei von der Systematik es möglich sein soll, Störungsimpulse zu unterdrücken.

Erfindungsgemäß wird die Aufgabe bei einem Verfahren gelöst, bei dem

- ein Hallsensor vor einem Impulsrad positioniert wird, das mit der Welle verbunden ist,
- das Impulsrad mit wenigstens einem Zahn, der eine ansteigende und eine abfallende Zahnflanke aufweist, und mit wenigstens einer Zahnlücke versehen ist,
- die Hallsensor in der Hallzelle den zeitlichen Verlauf einer magnetischen Flußdichte B, die durch das Impulsrad erzeugt wird, aufnimmt und als ein Hallspannungssignal abgibt,
- das Hallspannungssignal in einer Ausgabeschaltung in ein differenziertes Signal umgewandelt und daraus eine Rechteckimpulsfolge erzeugt wird,

und durch Anwendung folgender weiterer Schritte:

- Vergleich des Hallspannungssignals mit einem Schwellwertsignal und Bildung eines Stillstandsausgangssignals,

- Differenzieren des Hallspangssignals zu einer Differenzierspannung $dUH/dt = DF$

- Bildung eines Fenstersignals FS anhand des Vergleichssignals DF nach folgender Vorschrift:

    FS = 1 , wenn DF ungleich Null
    FS = 0 , wenn DF gleich Null;

- Bildung des Positionsausgangssignals aus dem Stillstandsausgangssignal bei einer Umdrehungszahl n = 0 U/min (Stillstand der Welle);

- Bildung des Positionsausgangsignals aus dem Fenstersignal FS und dem Stillstandsausgangssignal bei einer Drehzahl unterhalb einer Moduswechsel-Drehzahl

- und bei einer Umdrehungszahl oberhalb der Moduswechsel-Drehzahl aus der Rechteckimpulsfolge,

- wobei die Moduswechseldrehzahl höher als 1 U/min ist, vorzugsweise 20 U/min beträgt.

Die mit der Erfindung erzielten Vorteile bestehen insbesondere darin, daß die Position einer Welle im Stillstand, bei niedrigen Umdrehungen und bis zur höchsten Umdrehungszahl, wie z.B. bei 1500 U/min, 3000 U/min, 10000 U/min, feststellbar ist. Durch die Feststellung der genauen Winkelposition einer Welle, beginnend von 0, ist es z.B. möglich, die Benzineinspritzung für die einzelnen Zylinder schon beim Start und anschließend bei höheren Drehzahlen genau zu steuern. Hierdurch kann Kraftstoff gespart werden. Da das Dynamikausgangssignal aus der Überlagerung eines Rechteckimpulses mit der Teilimpulslänge und -lücken besteht, werden auftretende Störungen, die sich dem Meßsignal überlagern können, unterdrückbar.

Die Rechteckimpulsfolge kann durch aus dem Stand der Technik bekannte Verfahren erzeugt werden, und zwar unter Einsatz einer oder mehrerer, z.B. zweier Hallsensoren.

Das Verfahren kann vom Prinzip her nur mit einem Hallsensor arbeiten. Da jedoch nach dem derzeitigen Stand der Technik Hallsensoren nur über einen begrenzten Dynamikbereich verfügen, wird vorgeschlagen, daß mit mehreren Hallzellen gearbeitet wird, die jeweils entsprechend der herrschenden Drehzahl aktiviert sind.

Alternativ können von wenigstens zwei Hallsensoren zwei Hallspannungssignale erzeugt werden, deren Signaldifferenz anstelle des Differenziersignals verwendet werden.

Vorzugsweise können die Pegel der Fenstersiganle eine Impulshalbbreite aufweisen, die nach oben und unten etwa 0,1 bis 10 %, vorzugsweise 3 %, vom jeweiligen Übergang der Pegel des Reckeckimpulses abweicht. Hierdurch wird zum einen eine genaue Ausbildung des Rechteckimpulses und zum anderen ein störungsfreies Dynamikausgangssignal erzeugt. Durch die gewählte Impulshalbbreite kann es zu einer Abweichung zwischen dem Statik- und Dynamikausgangssignal im Umschaltpunkt kommen. Diese geringfügige Ungenauigkeit wiegt die Vorteile eines störungsfrei ausgegebenen Impulssignals auf.

Das Schwellwertsignal wird vorteilhafterweise als Schaltfenster gebildet, um das sich der Hallspannungsverlauf der magnetischen Flußdichte des Zahnes und der Zahnlücke gruppiert. Hierbei sind vorteilhafterweise folgende Ausbildungsvarianten möglich:

Das Schwellwertsignal wird mit seinem oberen und seinem unteren Spannungspegel durch ein feststehendes Fenster ausgebildet. Bei einer Messung werden die Hallspannungskurven der magnetischen Flußdichte derart verschoben, daß der unterste Spannungswert des Zahns den obersten Spannungspegel und der unterste Spannungswert der Zahnlücke den untersten Spannungspegel des Schaltfensters bilden.

Eine andere Möglichkeit ist, daß Schaltfenster durch einen getrimmten Widerstand derart einzustellen, daß bei feststehenden Hallspannungsverlauf der magnetischen Flußdichte des Zahns und der Zahnlücke an den untersten Spannungswert des Zahns und den untersten Spannungspegel des Schaltfensters an den untersten Spannungswert der Zahnlücke herangeführt wird.

Eine Vorrichtung zur Erfassung der Winkelposition einer rotierenden Welle ergibt sich aus dem Oberbegriff und dem kennzeichnenden Teil von Anspruch 7.

Die hiermit verbundenen Vorteile bestehen insbesondere darin, daß durch die Ergänzung einer dynamischen Ausgabeschaltung mit zwei Zusatzbeschaltungen in Gestalt einer Fenstersignaleinheit und einer Statikausgabeeinheit die Meßgenauigkeit und die Anwendungsmöglichkeit der Vorrichtung wesentlich erweitert wird. Die Fenstersignaleinheit steuert dabei die Ausgabeschaltung so an, daß eine entsprechende Überlagerung und Aufeinanderfolge der einzelnen Ausgangssignale erfolgt und ein einheitliches Positionsausgangssignal ausgegeben wird.

Ein zweiter Eingang der Fenstersignaleinheit kann mit einer zweiten Hallzelle verbunden werden. Vorteilhafterweise übernimmt außerdem die Fenstersignaleinheit zugleich die Aufgabe einer statischen Ausgabeeinheit. Hierdurch wird ein sehr stetiges und gleichmäßiges Signal ausgegeben. Dadurch, daß das Fenstersignal ständig erzeugt wird, wird vorteilhafterweise aus diesem Fenstersignal der Fensterimpulseinheit zugleich das Statikausgangssignal erzeugt.

Vorteilhaft ist es, wenn die Fenstersignaleinheit aus der Reihenschaltung einer Fensterschaltung und eines Fensterkomparators besteht, wobei der erste Hallsensor am ersten und der zweite Hallsensor am zweiten Eingang der Fensterschaltung und der Ausgang des Fensterkomparators mit der Ausgabelogik verbunden ist.

Vorteilhafterweise besteht die Fensterschaltung aus einem Dreifachkomparator und einem Summierglied, wobei auf den ersten der Dreifachkomparatoren die erste Hallsensorzelleneinheit, auf den zweiten die zweite Hallsensorzelleneinheit und auf den dritten eine Stromversorgungseinheit geschaltet ist und wobei die Ausgänge des Dreifachkomparators mit den drei Eingängen des Summiergliedes verbunden sind, dessen Ausgang am Fensterkomparator und der Ausgabeschaltung angeordnet ist. Hierdurch wird die formgerechte Ausbildung des Fenstersignales und der Teilimpulslänge bzw. Teilimpulslücke ausgebildet.

Die Stillstandsausgabeeinheit kann als Komparator ausgebildet sein. Ein Komparator ist eine Einrichtung, die zum Vergleich von zwei Eingangsgrößen dient. Hierdurch wird gewährleistet, daß ein gleichmäßig und genau geformtes Ausgangssignal ausgegeben wird, das einen Zahn bzw. eine Zahnlücke bei einem stehenden Impulsrades genau wiedergibt. Selbstverständlich ist es auch möglich, andere, auf einer vergleichbaren Wirkungsweise arbeitende Einrichtungen einzusetzen.

Die Erfindung wird nachstehend an einem Ausführungsbeispiel anhand der Zeichnung näher erläutert. Die Figuren der Zeichnung zeigen im einzelnen:

Fig. 1    ein Blockschaltbild einer Vorrichtung zur Erfassung der Winkelposition einer rotierenden Welle;

Fig. 2    ein Prinzipschaltbild eines Teils der Vorrichtung gemäß Fig. 1;

Fig. 3    ein Blockschaltbild einer Wendepunkterkennungsschaltung einer Vorrichtung gemäß Fig. 1:

Fig. 4a — ein Impulsrad einer Vorrichtung gemäß Fig. 1 in einer schematischen Seitenansicht;

Fig. 4b — einen Schnitt eines Impulsrades gemäß Fig. 4a entlang der Linie VIIB - VIIB und

Fig. 5 — ein weiteres Impulsrad einer Vorrichtung gemäß Fig. 1 in einer schematischen Seitenansicht.

Fig. 6a und b — Darstellungen eines Umschaltverhaltens einer Vorrichtung gemäß Fig. 1;

Fig. 7 — eine Darstellung eines Schaltfensters eines Schwellensignals in Bezug zum auftretenden Hallspannungsverlauf bei einem Impulsrad;

Fig. 8a — eine Übersicht von auftretenden Signalverlaufsformen in einer Stillstandsausgabeeinheit einer Vorrichtung gemäß Fig. 1 und 2 in einer schematischen Darstellung;

Fig. 8b — eine Übersicht von auftretenden Signalverlaufsformen in einer dynamischen Auswahleinheit einer Vorrichtung gemäß Fig. 1-3 in einer schematischen Darstellung;

Fig. 8c — eine Übersicht von auftretenden Signalverlaufsformen in einer Fenstersignaleinheit und einer Ausgabeschaltung in einer Vorrichtung gemäß Fig. 1 und 2 in einer schematischen Darstellung;

Fig. 8d — Signalverläufe analog Fig. 8a

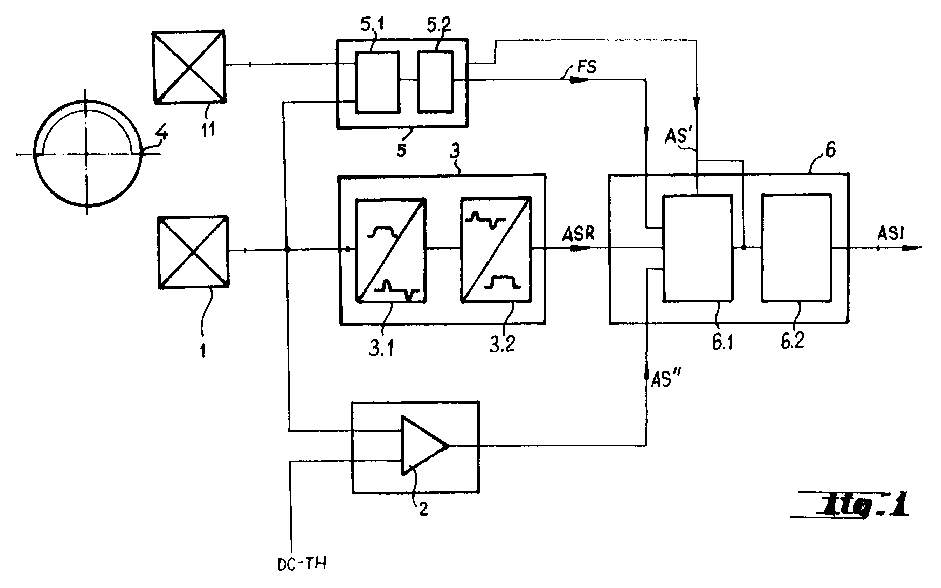

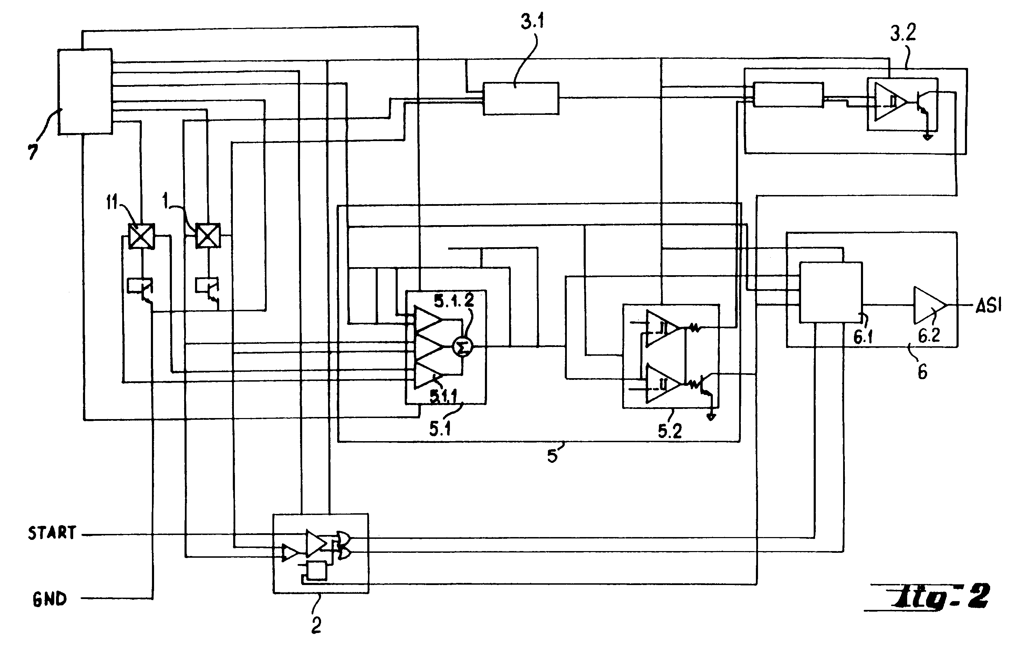

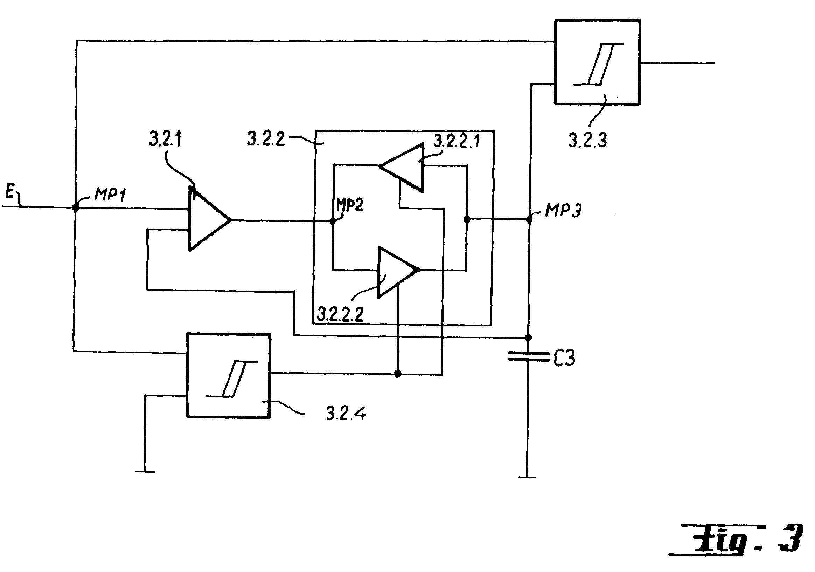

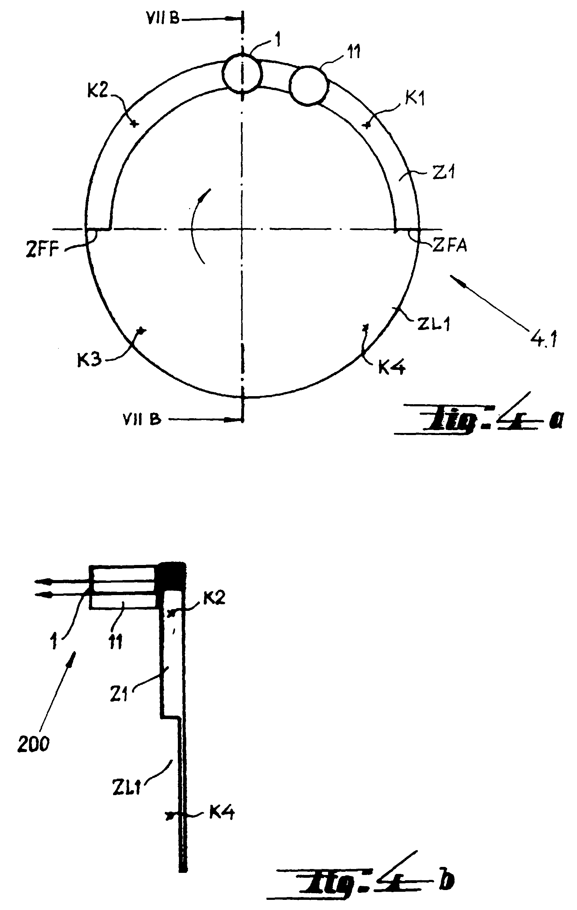

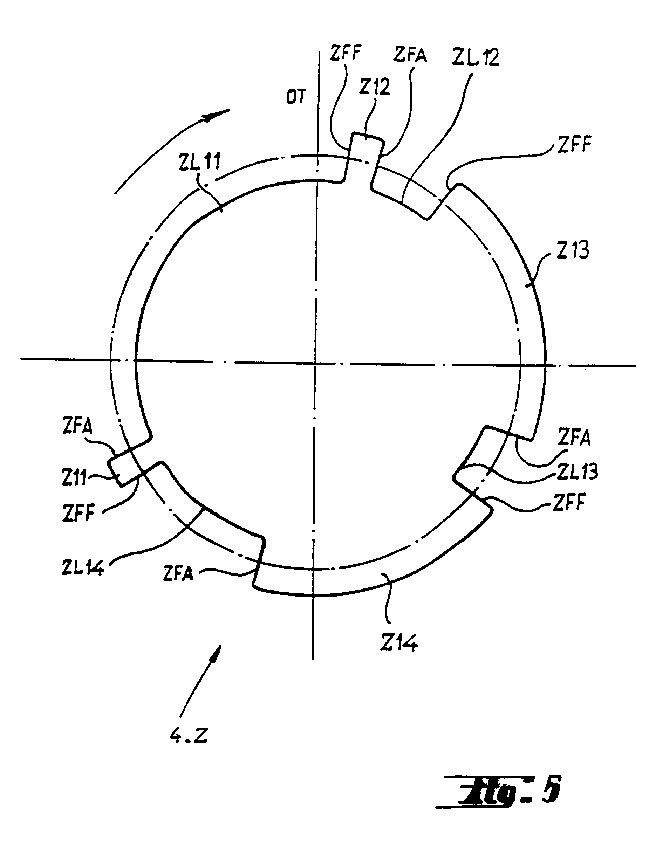

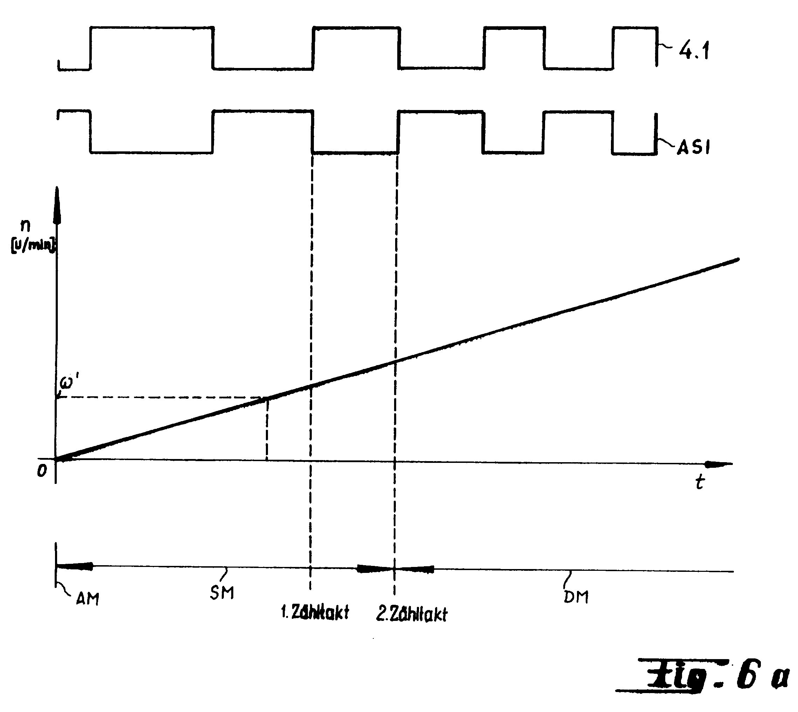

Eine Vorrichtung zur Erfassung der Winkelposition einer rotierenden Welle gemäß den Figuren 1 und 2 umfaßt einen Hallsensor mit einer ersten Hallzelle 1 und einer zweiten Hallzelle 11. Vor den Hallzellen 1 und 11 ist ein Impulsrad 4 positioniert. Die Hallzellen 1 und 11 umfassen dabei alle erforderlichen Elemente, die zur Aufnahme eines magnetischen Flusses erforderlich sind, unter anderem ein Hallelement, einen Magneten und einen entsprechenden Verstärkerkreis für das Hallelement. Es ist auch möglich, das Hallelement und den Magneten getrennt anzuordnen. Der Magnet ist ein Dauermagnet, insbesondere ein SmCo-Legierungsmagnet, der einen benötigten minimalen magnetischen Fluß von 150 mT im Hallelement gewährleistet. Die magnetischen Eigenschaften sind über einen Temperaturbereich von -15 bis +220 °C spezifiziert. Durch große Koerzitivfeldstärke ist der Magnet auch durch im Fahrzeug auftretende magnetische Störfelder nicht entmagnetisierbar. Der Magnet kann auch aus anderen Magnetwerkstoffen, wie Barium-Titanat-Ferriten, ausgebildet sein. Es sei auch die Möglichkeit nicht ausgeschlossen, speziell ausgebildete Elektromagnete einzusetzen.

An die Hallzelle 1 schließt sich eine dynamische Ausgabeschaltung 3 an. Sie besteht aus in Reihe geschaltetem Differenzierglied 3.1 und Wendepunkterkennungsschaltung 3.2.

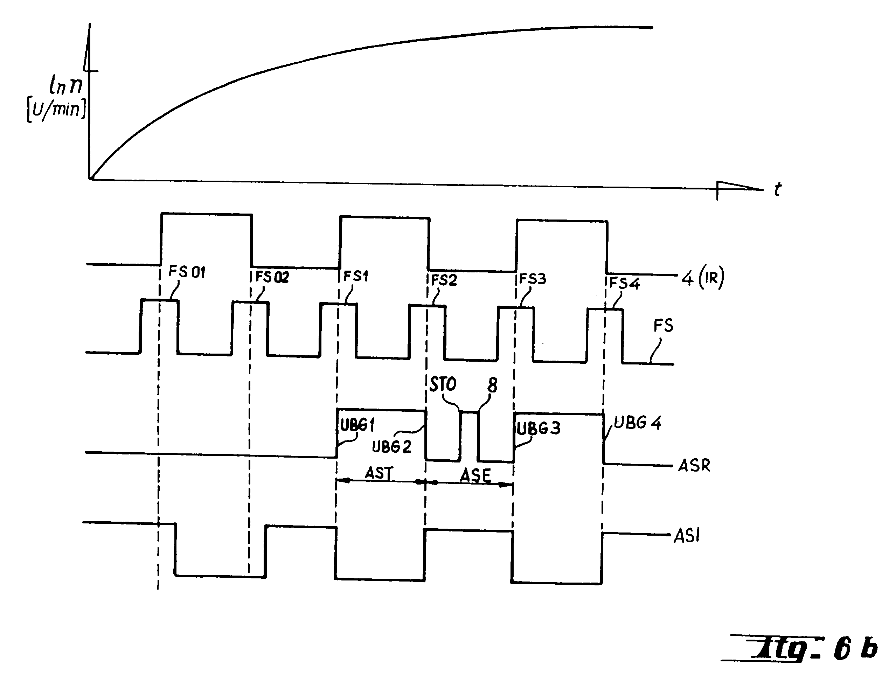

Der Eingang E der Wendepunkterkennungsschaltung 3.2 führt, wie Fig. 3 zeigt, auf den ersten Eingang eines Verstärkers 3.2.1, auf den ersten Eingang eines Komparators 3.2.3 und auf den ersten Eingang eines Komparators 3.2.4. Der zweite Eingang des Komparators 3.2.4 liegt an Erde. Mit einem bidirektionalen Treiber 3.2.2 ist der Ausgang des Verstärkers 3.2.1, der zweite Eingang des Komparators 3.2.3, der über einen Kondensator C3 an Erde GND liegt, und der Ausgang des Komparators 3.2.4 verbunden. Der bidirektionale Treiber 3.2.2 besteht aus zwei entsprechend verschalteten Treiberstufen 3.2.2.1 und 3.2.2.2. Innerhalb der Wendepunkterkennungsschaltung 3.2 befindet sich am Eingang E ein Meßpunkt MP1 an dem Verbindungspunkt des Eingangs des Verstärkers 3.2.1, des Eingangs des Komparators 3.2.3 und des Eingangs des Komparators 3.2.4, ein Meßpunkt MP2 an dem Verbindungspunkt des Ausgangs des Verstärkers 3.2.1 des Ausgangs der Treiberstufe 3.2.2.1 und des Eingangs der Treiberstufe 3.2.2.2, wobei beide Treiberstufen am Ausgang des Komparators 3.2.4 anliegen, und ein Meßpunkt MP3 am Anschlußpunkt der Verbindung vom Eingang des Komparators 3.2.3 zum Eingangs des Verstärkers 3.2.1 bzw. Kondensators C3.

Wie Fig. 1 bzw. Fig. 2 weiterhin zeigen, liegen zur dynamischen Ausgabeschaltung 3 eine Stillstandsausgabeeinheit 2 und eine Fenstersignaleinheit 5 parallel. In Reihe mit der dynamischen Ausgabeschaltung 3 ist eine Ausgangsschaltung 6 angeordnet. Bei letzterer ist eine Entscheidungslogikschaltung 6.1 vorhanden, der eine Ausgangseinheit 6.2 nachgeordnet ist.

Die Stillstandsausgabeeinheit 2 ist als Komparator 2' ausgebildet; dieser liegt mit seinem ersten Eingang an einem Schwellwertsignal DC-TH und mit seinem zweiten Eingang am Hallsensor 1. Der Ausgang des Komparators 2 ist mit der Entscheidungslogikschaltung 6.1 verbunden.

Das vor den Hallzellen1 bzw. 11 rotierende Impulsrad 4 kann verschiedene Ausführungsformen haben.

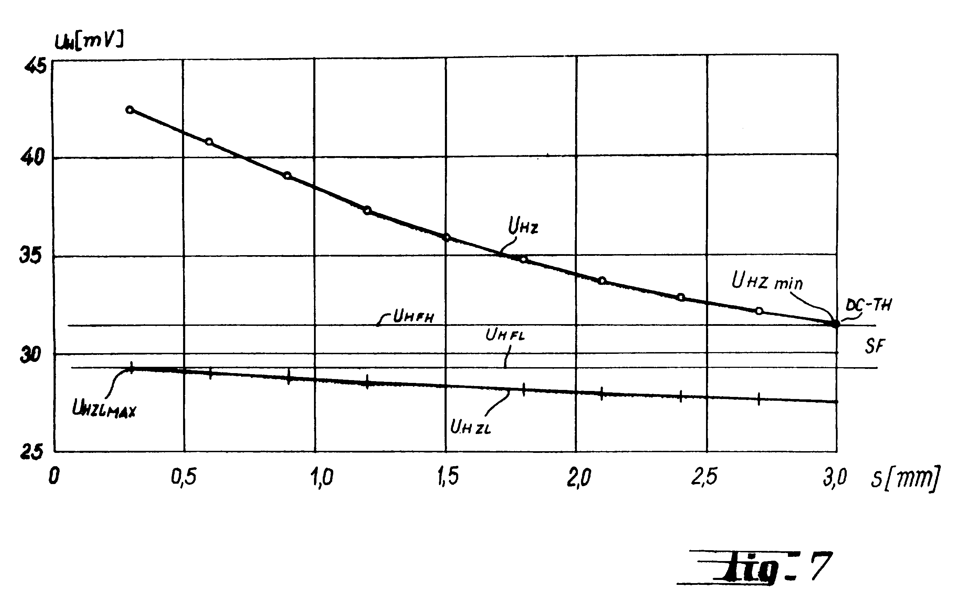

Ein Impulsrad 4.1 gemäß den Fig. 4a und 4b besitzt einen einzigen Zahn Z1 und eine einzige Zahnlücke ZL1. Der Zahn Z1 und die Zahnlücke ZL1 haben jeweils ein Breite von etwa 180°. Der Zahn Z1 weist eine ansteigende Zahnflanke ZFA und eine abfallende Zahnflanke ZFF auf.

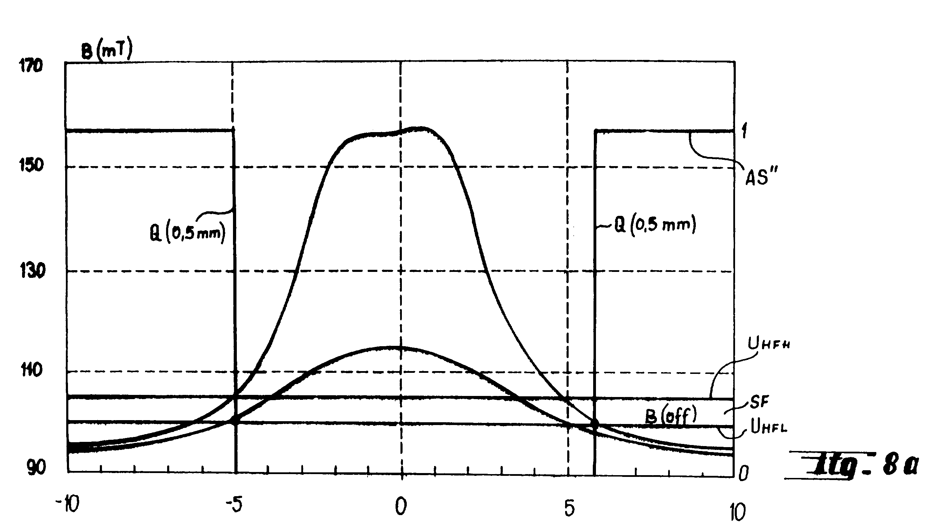

In Fig. 5 ist ein speziell ausgerüstetes Impulsrad 4.2 dargestellt, das mit der Welle, insbesondere der Nockenwelle, verbunden ist. "OT" zeichnet den oberen Totpunkt.

Das Impulsrad 4.2 weist Zähne Z11, Z12, Z13 und Z14 auf. Die Zähne Z11 und Z12 sind gleich ausgebildet und haben eine Breite von etwa 8° bei 360° Umfangswinkel. Dagegen haben die Zähne Z13 und Z14, die ebenfalls gleich ausgebildet sind, eine Breite von jeweils 65°.

Die Zahnflanken der Zähne Z11 bis Z14 sind wie folgt beabstandet:

a) die ansteigende Zahnflanke ZFA des Zahns Z11 hat von der absteigenden Zahnflanke ZFF einen Abstand von 8°;

b) die absteigende Zahnflanke ZFF des Zahnrads Zll hat von der ansteigenden Zahnflanke ZFA des Zahnrades Z14 einen Abstand von 60°;

c) die ansteigende Zahnflanke ZFA des Zahnrades Z14 hat von der abfallenden Zahnflanke ZFF des Zahnrades Z14 einen Abstand von 65°;

d) die abfallende Zahnflanke ZFF des Zahnrades Z14 hat von der ansteigenden Zahnflanke ZFA des Zahnrades Z13 einen Abstand von 20°;

e) die ansteigende Zahnflanke ZFA des Zahnrades Z13 hat von der abfallenden Zahnflanke ZFF des Zahnrades Z13 einen Abstand von 65°;

f) die abfallende Zahnflanke ZFF des Zahnrades Z13 hat von der ansteigenden Zahnflanke ZFA des Zahnrades Z12 einen Abstand von 20°;

g) die ansteigende Zahnflanke ZFA des Zahnrades Z12 hat von der abfallenden Zahnflanke des Zahnrades Z12 einen Abstand von 8°;

h) die abfallende Zahnflanke des Zahnrades Z12 hat von der ansteigenden Zahnflanke des Zahnrades Zll einen Abstand von 114°.

Im Komparator 2 werden die Meßwerte der Hallsensor 1 mit dem Schwellwertsignal DC-TH verglichen. Das Schwellwertsignal DC-TH, dargestellt durch einen Gleichstromwert, wird durch einen oberen und einen unteren Spannungspegel UHFH und UHFL begrenzt. Die Spannungspegel UHFH und UHFL bilden, wie Fig. 5 zeigt, ein Schaltfenster SF, das durch die Spannungspegel begrenzt ist.

Die Funktion der in den Figuren 1 bis 4 dargestellten Teile und weiterer Elemente soll im folgenden erläutert werden.

Vor den Hallzellen 1 und 11 rotiert ein Impulsrad 4.1, wie es in den Figuren 4a und 4b dargestellt ist.

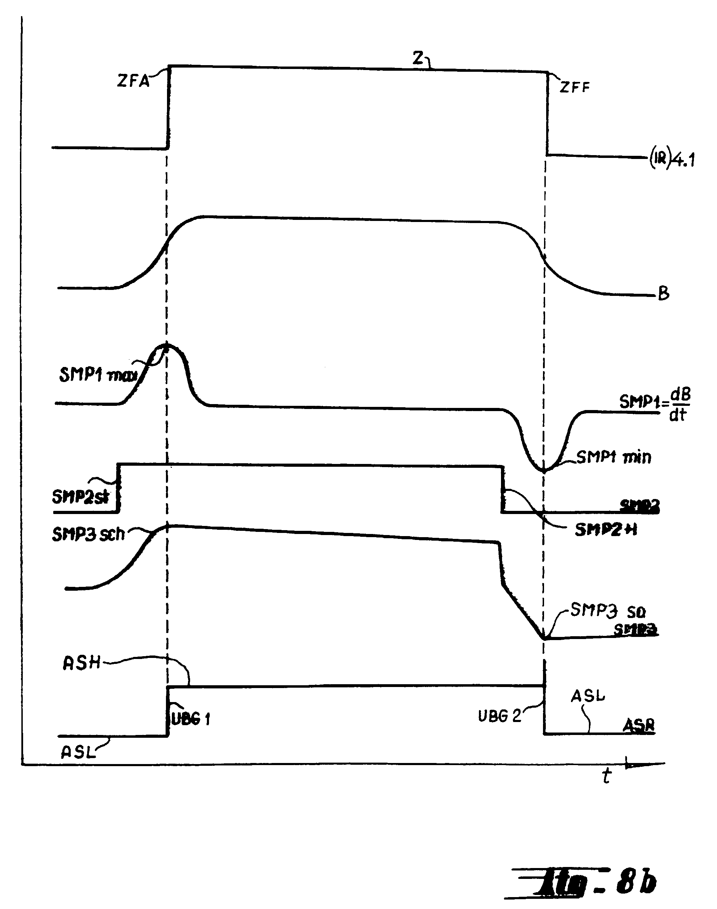

Eine Abwicklung des Impulsrades 4.1 bei steigender Umdrehungszahl in der Zeiteinheit ist in der Figur 6a als Kurve 4.1 (IR) gezeigt. Je schneller sich das Impulsrad dreht, desto zeitlich kürzer dauert die Vorbeifahrt der Zähne und Zahnlücken an den Hallzellen. Die Zähne weisen dabei, wie bereits beschrieben, eine ansteigende und eine abfallende Zahnflanke ZFA und ZFF auf.

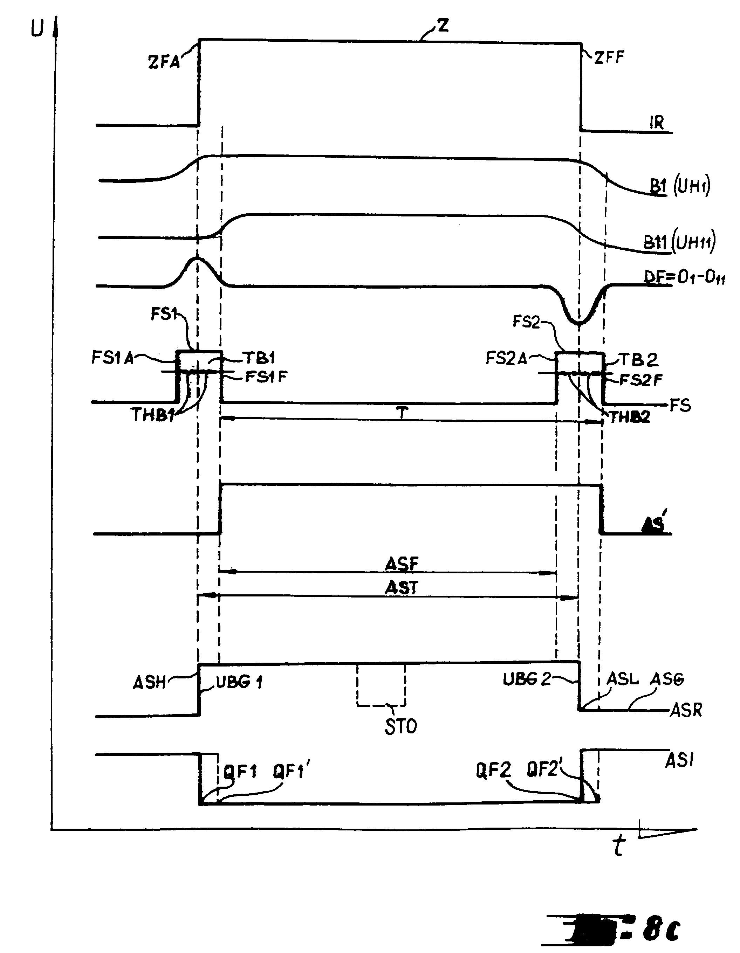

Der Komparator 2 stellt das "Stillstandselement" dar. In ihm werden die Meßwerte der Hallzelle 1 mit dem Schwellenwertsignal DC-TH verglichen. Das Schwellenwertsignal DC-TH, das ein Gleichstromsignal ist, wird durch einen oberen und einen unteren Spanungspegel UHZ und UZL begrenzt. Er bildet, wie Fig. 7 zeigt, ein Schaltfenster SF, das durch einen obersten Zahnlücken-Hallspannungswert UHZLmax und einen untersten Zahnlücken-Hallspannungswert UHZLmin begrenzt wird.

In Fig. 7 ist darüber hinaus der Verlauf der Zahn-Hallspannung UHZ und der Zahnlücken-Hallspannung UHZL dargestellt. Der unterste Zahn-Hallspannungspegel UHZmin begrenzt den obersten Schaltfensterpegel UHFH und der oberste Zahnlücken-Hallspannungswert UHZmax den intersten Schaltfensterpegel UHFL.

Die Justierung des Schaltfensters SF zwischen die beiden Hallspannungsverläufe ist auf zwei Arten möglich:

a) Mit Hilfe eines trimmbaren Widerstandes wird das Schaltfenster SF so verschoben, daß es zwischen dem untersten Zahn-Hall spannungswert UHZmin und dem obersten Zahnlücken-Hallspannungswert UHZmax zu liegen kommt. Die beiden Hallspannungskurven bleiben dabei unverändert.

b) Das Schaltfenster SF des Schwellwertsignals DC-TH ist feststehend. Die Hallspannungskurven werden so verschoben, daß der unterste Zahn-Hallspannungswert UHZmin oberhalb des oberen Schaltfensterspannungspegels UUHFH und der oberste Zahnlücken-Hallspannungswert UUHZL unterhalb des unteren Schaltfensterspannungspegels UHFL liegt.

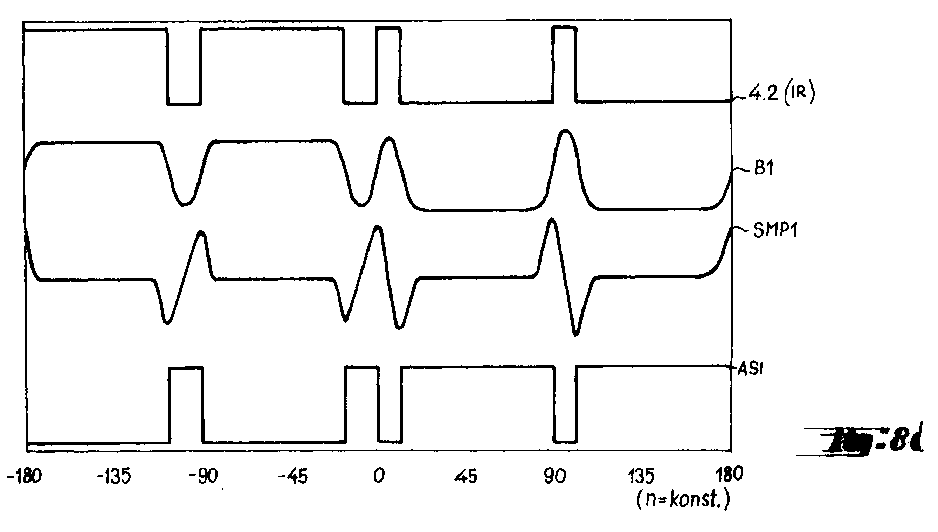

Das am Ausgang des Komparators 2 anstehende Signal AS" hat dabei eine Form, wie sie in Fig. 8a dargestellt ist. Deutlich wird, daß das abgegebene Signal AS" eine solche Form aufweist, die in etwa der eines Zahns entspricht.

Die dynamische Ausgabeschaltung 3 macht, wie in der DE 43 43 198 beeits angegeben, von der Erkenntnis Gebrauch, daß an der Zahnflanke sich die magnetische Flußdichte B sich zweitlich am schnellsten ändert. So hat die zeitliche Ableitung von B

$$B'(t) = dB/dt$$

ein ausgeprägtes Maximum an der ansteigenden Zahnflanke ZFA und ein ausgeprägtes Minimum an der abfallenden Zahnflanke ZFF.

Das vor der Hallzelle 1 rotierende Impulsrad 4.1 weist den Zahn Z auf, der eine ansteigende und eine abfallende Zahnflanke ZFA und ZFF besitzt. Dabei wird, wie insbesondere Fig. 8b zeigt, durch die Hallzelle 1 der Verlauf der Flußdichte B(t) abgefühlt. B(t) ist gekennzeichnet durch eine ansteigende (linke) und eine absteigende (rechte) Flanke. Die der Flußdichte B(t) entsprechenden Signale werden in einer entsprechenden Verstärkerschaltung verstärkt und in das Differenzierglied 3.1 eingegeben. Dabei wird das Signal B(t) in ein differenziertes Meßsignal

$$dB/dt = SMP1$$

umgewandelt. Das Meßsignal SMP1 zeichnet sich durch Ausschläge aus; der höchste Punkt des Maximalausschlages ist SMP1max und SMP1min der minimale Punkt.

Das so umgewandelte differenzierte Meßsignal SMP1 steht am Eingang E der Wendepunkterkennungsschaltung 3.2 am Meßpunkt MP1 (vgl. Fig. 3) an. Mit seinem Ausschlag SMP1max steuert das differenzierte Meßsignal SMP1 die Treiberstufen 3.2.2.1 und 3.2.2.2 des bidirektionalen Treibers 3.2.2 so an, daß im Meßpunkt MP2 ein rechteckförmiges Meßsignal SMP2 ansteht. Die steigende Flanke SMP2st des rechteckförmigen Meßpunktsignals SMP2 fällt hierbei mit dem beginnenden Anstieg des differenzierten Meßsignals SMP1 zusammen. Gleichzeitig wird im Meßpunkt MP3 der Kondensator C3 auf seinen Maximalwert aufgeladen.

Mit Beginn des Minimalausschlages des differenzierten Meßsignals SMP1 wird eine abfallende Flanke SMP2fl eines rechteckförmigen Meßsignales SMP2 erzeugt. Dies führt zu einer Entladung des Kondensators C3. Das hierdurch erzeugte Eckpunktmeßsignal SMP3 vom Kondensator c3 zeichnet sich durch einen Scheitelwert SMP3sch und durch einen Sohlewert SMP3so aus.

Am Ausgang des Komparators 3.2.3 wird ein Rechteckimpuls ASR mit einem einem High-Pegel ASH beim Erreichen des Scheitelwerte und einem Low-Pegel ASL bei Erreichen des Sohlewertes SMP3so ausgegeben.

Wie die Fig. 8b deutlich macht, bildet der Rechteckimpuls ASR die Form des Zahns Z nach. Dabei entspricht ein Übergang UBG1 vom Low-Pegel ASL zum High-Pegel ASH der Zahnflanke ZFA und ein Übergang UBG2 vom High-Pegel ASH zum Low-Pegel ASL der abfallenden Zahnflanke des Zahns Z. Durch die Folge von High- und Low-Pegeln ist es möglich, eine entsprechende Impulsfolge ASR zu erzeugen.

Die Funktion der Fenstersignaleinheit 5 gemäß den Figuren 1 und 2 vollzieht sich wie folgt:

Beim Drehen des Zahnrades 4, 4.1 bzw. 4.2 vor den Hallzellen 1 und 11 wird, wie insbesondere Fig. 8c zeigt, aus der Abbildung eines Zahns Z mit einer ansteigenden und einer abfallenden Zahnflanke ZFA und ZFF der magnetische Fluß B1(t) und B11(t) erfaßt. Die den Flußdichteverläufen Bl(t) und Bll(t) entsprechenden Signale werden verstärkt und miteinander verglichen, d. h., die Differenz gebildet, und ein Vergleichssignal DF erzeugt. Hieraus wird ein Fenstersignal FS mit Impulsen FS1 und FS2 gebildet.

Die Impulse FS1 und FS2 liegen dabei über den Übergängen UBG1 und UBG2 des Rechteckimpulssignals ASR der dynamischen Auswerteschaltung 3 derart, daß deren Pegelbreite TB1 bzw. TB2 in zwei gleiche Hälften THB1 und THB2 unterteilt wird. Die Pegelhalbbreiten THB1 bzw. THB2 entsprechen einer Breite von in etwa 3°. Das Fenstersignal FS hat eine Periodendauer T, die in etwa einer Rechteckimpulslänge AST (Zahnabbildung) des Rechteckimpuls ASR entspricht. Mit Hilfe der Dreifachkomparatoren 5.1.1 und des Summiergliedes 5.1.2 wird eine Impulslänge ausgebildet, die von einer fallenden Flanke FS1F des Impulses FS1 bis zur fallenden Flanke FS2F des Impulses FS2 reicht und ein Statikausgangssignal AS' erzeugt. Dieses Statikausgangssignal bildet dabei gleichfalls den Zahn Z nach, allerdings mit der bereits erwähnten Phasenverschiebung THB = 3°.

In der Entscheidungslogikschaltung 6.1 werden das Fenstersignal FS und das Rechteckimpulssignal ASR miteinander verglichen. Liegt kein Rechteckimpulssignal ASR bis zu einer bestimmten Drehzahl des Impulsrades 4.1 vor, wird das Statikausgangssignal AS' weitergegeben. Ist das Rechtecksignal ASR ab einer bestimmten Drehzahl vorhanden, wird es mit dem Fenstersignal FS in der Entscheidungslogik 6.1 verknüpft und durch die Entscheidungslogik 6.1. eine Teilimpulslänge ASF erzeugt, die von der fallenden Flanke FS1F des Impulses FS1 bis zur ansteigenden Flanke FS2A des Impulses FS2 reicht.

Analog wird eine Teilimpulslückenlänge ASG erzeugt (vgl. Fig. 8c). Die aus Rechteckimpulsen ASR bestehende Impulsfolge wird mit den Teilimpulslängen ASF und den Teilimpulslückenlängen ASG verknüpft und als noch störungsempfindliches Dynamiksignal als Positionsausgangssignal ASI ausgegeben. Bei der Aufnahme oder Erzeugung entstehende Störungsimpulse STO können das Positionsausgangssignal nicht verfälschen.

Die Arbeitsweise der erfindungsgemäßen Vorrichtung, wie sie sich aus dem vorbeschriebenen ergibt, sei erläutert:

Das vor den Hallzellen 1 und 11 rotierende Impulsrad 4.1 gemäß Fig. 4a und 4b erzeugt beginnend vom Stillstand bis zu seiner Nenndrehzahl eine Abwicklung, die der Kurve IR in Fig. 4a entspricht. Dieser Abwicklung entspricht etwa eine Signalfolge des an der Ausgangssignaleinheit 6.2. abgegebenen Positionsausgangssignals ASI.

Die erfindungsgemäße Vorrichtung repräsentiert dabei folgende Zweige:

A) Einen Stillstandszweig
   Er wird repräsentiert durch die Hallzelle 1 und den Komparator 2. Er arbeitet gemäß Fig. 6a im Anfahr-Modus AM und gibt ein Stillstandsignal AS" aus.

B) Einen statischen Zweig
   Er wird repräsentiert durch beide Hallzellen 1 und 11 und die Fensterschaltung 5; im statischen Modus SM gemäß Fig. 4a gibt er ein Statikausgangssignal AS' aus.

C) Einen dynamischen Zweig
   Er besteht aus der Zusammenschaltung der Hallzelle 1 und der dynamischen Ausgangsschaltung 3 und gibt gemäß Fig. 4a im dynamischen Modus DM ein Ausgangssignal ASR aus.

D) Einen Störimpulsunterdrückungszweig
   Er besteht aus den Hallzellen 1 und 11, der Fensterschaltung 5 und der Ausgabeschaltung 6. Er gibt das Positionsausgangssignal ASI aus.

Anfahr-Modus AM

Das verstärkte und temperaturkompensierte Hallsignal wird dem Komparator 2 zugeführt und, wie bereits beschrieben, mit dem von außen eingestellten Schaltpunkt, der durch das Schwellwertsignal DC-TH repräsentiert wird, verglichen. Bei hohen Flüssen (Zahn) schaltet der Ausgang durch (Low-Pegel).
Das so erzeugte Stillstandsausgangssignal AS" wird auf die Entscheidungslogikschaltung 6.1 gegeben und von dieser wegen des nicht vorliegenden Fenstersignals und des nicht vorhandenen Scheitelimpulses ASR über die Ausgangseinheit 6.2. als Anfangssignal des Positionsausgangssignals ASI ausgegeben.

Modus SM mit erhöhter, jedoch noch relativ kleiner Umdrehungszahl

Bei einer Erhöhung der Nenndrehzahl n des Zahnrades 4.1 wird in der bereits beschriebenen Art und Weise das Fenstersignal FS als eine Folge von Impulsen FS01, FS02, FS1, FS2, FS3 und FS4 erzeugt (vgl. auch Fig 6b). Hierbei wird das an Hand der Fig. 8c bereits erläuterte Statikausgangssignal AS' gebildet. Dieses steht an der Entscheidungslogikschaltung 6.1 an. Bei Vorhandenseins des Fenstersignals FS wird darüber hinaus entschieden, daß bei nicht vorliegendem Rechteckausgangssignal ASR anstelle des Stillstandsausgangssignals AS" jetzt das Statikausgangssignal AS' über die Ausgangseinheit 6.2 als Positionsausgangssignal ASI auszugeben ist.
Die Fensterschaltung 5 kann so geschaltet werden, daß sie nach einer Erhöhung der Nenndrehzahl n des Impulsrades nur das Fenstersignal FS in der beschriebenen Impulsfolge FSO1, ... erzeugt. In diesem Falle gibt der Komparator 2 nach dem Stillstandssignal AS" auch das Statikausgangssignal AS' über die Ausgabeeinheit 6.2 als Positionsausgangssignal ASI aus.

Dynamischer Modus DM (Schnellauf)

Mit Hilfe der beiden Hallzellen 1 und 11 wird jeweils an den Zahnflanken ZFA und ZFF ein Schaltfenster eröffnet, das durch die Teilimpulslängen ASF und die Teilimpulslücken ASG gebildet wird. Rechtecksignale der dynamischen Ausgangsschaltung werden nur innerhalb dieses Fensters an den Ausgang weitergeleitet.
Ist innerhalb des Fensters ein Rechteckimpulssignal ASR vorhanden, schaltet die Entscheidungslogikschaltung 6.1 der Ausgabeschaltung 6 um. Diese Funktion hat den Vorteil, daß ungewollte Störsignale STO, hervorgerufen durch einen Höhenschlag des Impulsrades oder elektromagnetische Einstrahlungen, verhindert werden und andererseits ein Betrieb >0 U/min ermöglicht wird.
Die Scheitelpunkte der Fenstersignaleinheit 5 (vergl. Fig. 8c, Signal DF) werden bei montierter Platine eines Funktionsmoduls abgeglichen, um eine Serienstreuung zu vermeiden und ein symmetrisches Schalten zu gewährleisten. Bei der Montage und Herstellung der integrierten Schaltkreise (IC) sowie durch des Inhomogenitäten des Magneten kann eine verfrühtes oder verspätetes Schalten der Fenstersignaleinheit 5 auftreten. Um ein symmetrisches Fenstersignal FS zu erhalten, wird durch einen trimmbaren Widerstand in der Fensterschaltung 5.1 der Offset der aufgebauten Vorrichtung kompensiert. Bedingt durch die Fenstersignaleinheit 5 ist bei der Montage die Überstreichrichtung des Impulsrades zu beachten.
Oberhalb einer Moduswechseldrehzahl nm von etwa 20 U/min wird so die Impulsfolge aus den noch störungsanfälligen Rechteckimpulsen ASR mit den Teilimpulslängen ASF bzw. den Teilimpulslückenlängen ASG verknüpft und das störungsempfindliche Dynamiksignal als Positionsausgangssignal ASI ausgegeben.
Kommt ein Impulsrad 4.2 zum Einsatz, das dem der Fig. 5 in etwa entspricht, entstehen Impulsfolgen, wie sie in Fig. 8d dargestellt sind. Wie erkennbar ist, bildet das Positionsausgangssignal ASI das Impulsrad 4.2 exakt nach.
Verwendet wird die erfindungsgemäße Vorrichtung insbesondere für die Ermittlung der Kolbenstellung eines Kraftstoffantriebsmotors. In Fig. 4a und 4b sind die möglichen Stellungen der Kolben K1, K2, K3 und K4 eingezeichnet. Bereits im Stillstand kann die Vorrichtung feststellen, welche Stellung die Kolben K1, ... haben. Der Zahn Z1 und die Lücke ZL1 geben die Stellungen der Kolben K1 und K2 bzw. K3 und K4 an eine Steuerelektronik weiter, mit deren Hilfe die Kraftstoffeinspritzung nur z.B. in die Kolben K1 und K2 vorgenommen wird. Die Kolben K1 und K2 sind dabei diejenigen Kolben, die für den Anfahrmoment die größte Kraft ausüben. Durch diese Maßnahme wird ganz gezielt Kraftstoff gespart.

Auch bei einem weiteren Lauf des Motors wird die Stellung der einzelnen Kolben K1, ... jeweils erfaßt und bei höheren Drehzahlen störfrei und genauestens erfaßt und jeweils nur in den jeweils entsprechenden Kolben K1, ... Benzin eingespritzt, so daß eine maximale Kraftausübung garantiert wird. Bei Drehzahlen oberhalb der Moduswechseldrehzahl n' kann die Position der Zahnflanken mit einer Genauigkeit von ± 0,5° bei Arbeitsabständen von 0,3 bis 2,1 mm und einem Temperaturbereich von -40° bis 150° erkannt werden. Die Auflösung ist zahnteilungsabhängig doch verbessert sich mit steigender Zahl der Zähne Z. Einsetzbar ist die Vorrichtung an Impulsrädern (IR), deren Zahnmodul größer 2 ist.

## Patentansprüche

1. Verfahren zur Erfassung der Winkelposition einer rotierenden Welle, bei dem

   - ein Hallsensor mit einer Hallzelle (1; 11) vor einem Impulsrad (4; 4.1; 4.2) positioniert wird, das mit der Welle verbunden ist,
   - das Impulsrad mit wenigstens einem Zahn (Z1; Z11, ..., Z14), der eine ansteigende und eine abfallende Zahnflanke (ZFA, ZFF) aufweist, und mit wenigstens einer Zahnlücke (ZL1; ZL11, ...,ZL14) versehen ist,
   - die Hallzelle (1, 11) den zeitlichen Verlauf einer magnetischen Flußdichte (B), die durch das Impulsrad (4, 4.1, 4.2) erzeugt wird, aufnimmt und als ein Hallspannungssignal UH abgibt,
   - das Hallspannungssignal UH in einer Ausgabeschaltung (3) in ein differenziertes Signal (SMP) umgewandelt und daraus eine Rechteckimpulsfolge (ASR) erzeugt wird,

   gekennzeichnet durch folgende weitere Verfahrensschritte:

   - Vergleich des Hallspannungssignals UH mit einem Schwellwertsignal (DC-TH) und Bildung eines Stillstandsausgangssignals (AS")
   - Differenzieren des Signals UH nach der Zeit t zu einer Differenzierspannung DF

   $$DF = dUH/dt$$

   - Bildung eines Fenstersignals FS anhand des Vergleichssignals DF nach folgender Vorschrift:

   FS = 1 , wenn DF ungleich Null
   FS = 0 , wenn DF gleich Null,

   - Bildung eines Positionsausgangssignals (ASI) aus dem Stillstandsausgangssignal (AS") bei einer Umdrehungszahl n = 0 U/min,
   - Bildung des Positionsausgangssignal (ASI) aus dem Fenstersignal FS und dem Stillstandsausgangssignal (AS") bei einer Drehzahl unterhalb einer Moduswechsel-Drehzahl n',
   - und bei einer Umdrehungszahl n oberhalb der Moduswechsel-Drehzahl n' aus der Rechteckimpulsfolge (ASR),
   - wobei die Moduswechsel-Drehzahl n' höher als 1 U/min liegt, vorzugsweise 20 U/min beträgt.

2. Verfahren nach Anspruch 1, dadurch gekennzeichnet, daß der Hallsensor mit mehreren Hallzellen ausgestattet ist, die jeweils entsprechend der herrschenden Drehzahl n aktiviert sind.

3. Verfahren nach Anspruch 1 oder 2, dadurch gekennzeichnet, daß von wenigstens zwei Hallzellen (1, 11) zwei Hallspannungssignale (UH1, UH11) erzeugt werden, deren Signaldifferenz anstelle des Differenziersignals DF verwendet wird.

4. Verfahren nach Anspruch 1, dadurch gekennzeichnet, daß die Pegel (FS1, FS2) eine Impulshalbbreite (THTB1, THTB2) aufweisen, die etwa ± 0,1 bis 10 %, vorzugsweise 3 % vom jeweiligen Übergang (UBG1, UBG2) der Pegel (AFL, ASH) des Reckeckimpulses (ASR) abweichen.

5. Verfahren nach einem der Ansprüche 1 bis 4, dadurch gekennzeichnet, daß das Schwellwertsignal (DC-TH) durch ein feststehendes Schaltfenster (SF) gebildet wird, um das der Hallspannungsverlauf der magnetischen Flußdichte (B1) des Zahns (Z1; Z11, ..., Z14) und der Zahnlücke (ZL1; ZL11, ..., ZL14) derart eingestellt wird, wobei der unterste Hall-Spannungswert (UHZmin) des Zahns (Z1; Z11 ...., Z14) den obersten Spannungspegel (UHFH) und der oberste Hallspannungswert (UHZmax) der Zahnlücke (ZL1; ZL11, ..., ZL14) den untersten Spannungspegel (UHFL) des Schaltfensters (SF) bilden.

6. Verfahren nach einem der Ansprüche 1 bis 4, dadurch gekennzeichnet, daß das Schaltfenster (SF) des Schwellwertsignals (DC-TH) durch einen Trimmwiderstand derart eingestellt wird, daß bei feststehendem Hallspannungsverlauf (U) der magnetischen Flußdichte (B1) des Zahns (Z1; Z11, ..., Z14) der oberste Spannungspegel (UHFH) an den untersten Spannungswert (UHZmin) des Zahns (Z1; Z11, ..., Z14) und der unterste Spannungspegel (UHFL) des Schaltfensters (SF) an den untersten Spannungswert (UHZmax) der Zahnlücke (Zll; ZL11, ..., ZL14) herangeführt wird.

7. Vorrichtung zur Erfassung der Winkelpositionen einer rotierenden Wellen, umfassend,

  - ein Impulsrad (4, 4.1, 4.2), das mit einer Welle verbindbar ist und das wenigstens einen Zahn (Z1; Z11, ..., Z14), der eine ansteigende und eine abfallende Zahnflanke (ZFA, ZFF) hat und eine Zahnlücke (ZL1; ZL11, ..., ZL14) aufweist,
  - eine Hallsensoreinheit mit wenigstens einer Hallzelle (1, 11), vor der das Impulsrad (4, 4.1, 4.2) drehbar angeordnet ist und
  - eine dynamische Auswahlschaltung (3), die mit wenigstens einer der Hallzellen (1) verbunden ist,

    dadurch gekennzeichnet,

    daß zu der dynamischen Auswahlschaltung (3) eine Fenstersignaleinheit (5) und eine Stillstandsausgabeeinheit (2) parallel geschaltet sind, denen eine Ausgabeschaltung (6) nachgeordnet ist, wobei die erste Hallzelle (1) mit einem ersten Eingang der Fenstersignaleinheit (5) verbunden ist, deren Ausgang an der Ausgabeschaltung (6) angeordnet ist,

    wobei die Stillstandsausgabeeinheit (2) am ersten Eingang mit einem Schwellwertsignal (DC-TH) beaufschlagt ist und mit dem zweiten Eingang an der ersten Hallzelle (1) anlegt und mit ihrem Ausgang mit der Ausgabeschaltung (6) verbunden ist, und wobei der Ausgang der dynamischen Ausgangsschaltung (3) an der Ausgabeschaltung (6) angeordnet ist.

8. Vorrichtung nach Anspruch 7, dadurch gekennzeichnet, daß eine zweite Hallzelle (11) an einem zweiten Eingang der Fenstersignaleinheit (5) angeordnet ist.

9. Vorrichtung nach Anspruch 7 oder 8, dadurch gekennzeichnet, daß die Fenstersignaleinheit (5) zugleich eine statische Ausgabeeinheit ist.

10. Vorrichtung nach einem der Ansprüche 7 bis 9, dadurch gekennzeichnet, daß die Fenstersignaleinheit (5) aus der Reihenschaltung einer Fensterschaltung (5.1) und eines Fensterkomparators (5.2) besteht, wobei die erste Hallsensoreinheit (1) am ersten und die zweite Hallsensoreinheit (11) am zweiten Eingang der Fensterschaltung (5.1) und der Ausgang des Fensterkomparators (5.2) mit der Ausgabeschaltung (6) verbunden ist.

11. Vorrichtung nach einem der Ansprüche 7 bis 10, dadurch gekennzeichnet, daß die Fensterschaltung (5.1) aus einem Dreifachkomparator (5.1.1) und einem Summierglied (1.2) besteht, wobei auf den ersten der Dreifachkomparatoren die erste Hallsensoreinheit (1), auf den zweiten die zweite Hallsensoreinheit (11) und auf den dritten eine Stromversorgung (7) geschaltet ist und wobei die Ausgänge des Dreifachkomparators (5.1.1) mit den drei Eingängen des Summiergliedes (5.1.2) verbunden sind, dessen Ausgang am Fensterkomparator (5.2) und an der Ausgabeschaltung (6) angeordnet ist.

12. Vorrichtung nach einem der Ansprüche 7 bis 11, dadurch gekennzeichnet, daß die Ausgabeschaltung (6) aus einer Entscheidungslogikschaltung (6.1) und einer nachgeordneten Ausgangseinheit (6.2) besteht, wobei der erste Eingang der Entscheidungslogikschaltung (6.1) mit dem Ausgang der Fensterschaltung (5.2), der zweite Eingang mit dem Ausgang der dynamischen Auswahlschaltung (3) und der dritte Eingang mit dem Ausgang der Stillstandsausgabeeinheit (2) verbunden ist, und wobei am Ausgang der Ausgangseinheit (6.2) das Postionsausgangssignal (ASI) ansteht.

13. Vorrichtung nach einem der Ansprüche 7 bis 12, dadurch gekennzeichnet, daß die Stillstandsausgabeeinheit ein Komparator (2) ist.

## Claims

1. A method of detecting the angular position of a rotating shaft, wherein

  - a Hall sensor with a Hall cell (1; 11) is positioned in front of a pulse wheel (4; 4.1; 4.2) connected to the shaft,

  - the pulse wheel has at least one tooth (Z1; Zll, ..., Z14) which has an ascending and a descending tooth flank (ZFA, ZFF) and is provided with at least one tooth gap (ZL1, ZL11, ..., ZL14),

  - the Hall cell (1, 11) receives and delivers as a Hall voltage signal the curve per unit of time of a magnetic flux density (B) generated by the pulse wheel (4, 4.1, 4.2),

  - the Hall voltage signal UH is converted in an output circuit (3) into a differentiated signal (SMP) and from this a square pulse sequence (ASR) is generated,

  characterised by the following additional method steps:

  - comparison of the Hall voltage signal UH with a threshold signal (DC-TH) and the formation of a standstill output signal (AS"),

- differentiation of the signal UH according to time t to give a differentiation voltage DF

$$DF = dUH/dt$$

- formation of a window signal FS by reference to the comparison signal DF in accordance with the following stipulation:

  FS = 1 if DF is not equal to zero
  FS = 0 if DF is equal to zero,

- formation of a position output signal (ASI) from the standstill output signal (AS") for a speed of revolution n = 0 rpm,

- formation of the position output signal (ASI) from the window signal FS and the standstill output signal (AS") at a speed below a mode change speed n',

- and at a speed of revolution n above the mode change speed n' from the square pulse sequence (ASR),

- the mode change speed n' being more than 1 rpm, preferably 20 rpm.

2. A method according to claim 1, characterised in that the Hall sensor is equipped with a plurality of Hall cells each activated in accordance with the prevailing speed n.

3. A method according to claim 1 or 2, characterised in that two Hall voltage signals (UH1, UH11) are generated by at least two Hall cells (1, 11), the signal difference thereof being used instead of the differentiation signal DF.

4. A method according to claim 1, characterised in that the levels (FS1, FS2) have a pulse half width (THTB1, THTB2), which differ approximately ± 0.1 to 10%, preferably 3%, from the respective transition (UBG1, UBG2) of the levels (AFL, ASH) of the square pulse (ASR).

5. A method according to any one of claims 1 to 4, characterised in that the threshold signal (DC-TH) is formed by a fixed switching window (SF) about which the Hall voltage curve of the magnetic flux density (B1) of the tooth (Z1; Z11, ..., Z14) and of the tooth gap (ZL1; ZL11, ..., ZL14) is so adjusted, the lowest Hall voltage value (UHZmin) of the tooth (Z1; Z11, ..., Z14) forming the highest voltage level (UHFH) and the highest Hall voltage level (UHZmax) of the tooth gap (ZL1; ZL11; ..., ZL14) forming the lowest voltage level (UHFL) of the switching window (SF).

6. A method according to any one of claims 1 to 4, characterised in that the switching window (SF) of the threshold signal (DC-TH) is so adjusted by a trimming resistor that for a fixed Hall voltage curve (U) of the magnetic flux density (B1) of the tooth (Z1; Z11, ..., Z14), the highest voltage level (UHFH) is brought to the lowest voltage level (UHZmin) of the tooth (Z1; Z11; ..., Z14) and the lowest voltage level (UHFL) of the switching window (SF) is brought to the lowest voltage value (UHZmax) of the tooth gap (ZL1; ZL11, ..., ZL14).

7. Apparatus for detecting the angular positions of a rotating shaft, comprising

- a pulse wheel, (4, 4.1, 4.2) which is connectable to a shaft and which has at least one tooth (Z1; Z11; ..., Z14), which has an ascending and a descending tooth flank (ZFA, ZFF) and a tooth gap (ZL1; ZL11, ..., ZL14),

- a Hall sensor unit with at least one Hall cell (1, 11) in front of which the pulse wheel (4, 4.1, 4.2) is arranged to be rotatable and

- a dynamic selector circuit (3) which is connected to at least one of the Hall cells (1),

  characterised in that

  a window signal unit (5) and a standstill output unit (2) are connected in parallel with the dynamic selector circuit (3) and are followed by an output circuit (6), the first Hall cell (1) being connected to a first input of the window signal unit (5), the output of which is disposed at the output circuit (6),

  the standstill output unit (2) receiving at the first input a threshold signal (DC-TH) and the second input being connected to the first Hall cell (1) and its output being connected to the output circuit (6), the output of the dynamic output circuit (3) being disposed at the output circuit (6).

8. Apparatus according to claim 7, characterised in that a second Hall cell (11) is disposed at a second input of the window signal unit (5).

9. Apparatus according to claim 7 or 8, characterised in that the window signal unit (5) is at the same time a static output unit.

10. Apparatus according to any one of claims 7 to 9, characterised in that the window signal unit (5) consists of the series connection of a window circuit (5.1) and a window comparator (5.2), the first Hall sensor unit (1) being connected at the first input and the second Hall sensor unit (11) being connected at the second input of the window circuit (5.1) and the output of the window comparator (5.2) being connected to the output circuit (6).

11. Apparatus according to any one of claims 7 to 10, characterised in that the window circuit (5.1) consists of a triple comparator (5.1.1) and a summating network (1.2), the first Hall sensor unit (1) being connected to the first of the triple comparators, the second Hall sensor unit (11) being connected to the second and a power supply (7) being connected to the third and wherein the outputs of the triple comparator (5.1.1) are connected to the three inputs of the summation network (5.1.2), the output of which is disposed at the window comparator (5.2) and at the output circuit (6).

12. Apparatus according to any one of claims 7 to 11, characterised in that the output circuit (6) consists of a decision logic circuit (6.1) followed by an output unit (6.2), the first input of the decision logic circuit (6.1) being connected to the output of the window circuit (5.2), the second input being connected to the output of the dynamic selector circuit (3) and the third input being connected to the output of the standstill output unit (2), and wherein the position output signal (ASI) is present at the output of the output unit (6.2).

13. Apparatus according to any one of claims 7 to 12, characterised in that the standstill output unit is a comparator (2).

**Revendications**

1. Procédé de détection de la position angulaire d'un arbre tournant dans lequel

- un capteur de Hall à cellule de Hall (1; 11) est positionné devant une roue à impulsions (4; 4.1; 4.2) qui est reliée à l'arbre,

- la roue à impulsions est pourvue d'au moins une dent (Z1; Z11, ..., Z14), qui présente un flanc de dent montant et un flanc de dent descendant (ZFA, ZFF) et au moins un entredent (ZL1, ZL11, ... ZL14);

- la cellule de Hall (1, 11) reçoit le profil, en fonction du temps, d'une densité de flux magnétique (B) qui est engendrée par la roue à impulsions (4, 4.1, 4.2) et l'envoie comme signal de tension de Hall UH,

- le signal de tension de Hall UH est converti dans un circuit de sortie (3) en un signal différentié (SMP) et une séquence d'impulsions rectangulaire (ASR) est engendrée à partir de ce dernier,

caractérisé par les étapes additionnelles consistant à :

- comparer le signal de tension de Hall UH à un signal de valeur de seuil (DC-TH) et former un signal de sortie d'arrêt (AS")

- différencier en fonction du temps t le signal pour former une tension de différenciation DF

$$DF = dUH/dt$$

- former un signal de fenêtre FS à l'aide du signal de comparaison DF selon la prescription suivante:

FS = 1 lorsque DF n'est pas nul

FS = 0 lorsque DF est nul,

- former un signal de sortie de position (ASI) à partir du signal de sortie d'arrêt (AS") pour une vitesse de rotation n = 0 tours/min

- former le signal de sortie de position (ASI) à partir du signal de fenêtre FS et du signal de sortie d'arrêt (AS") pour une vitesse de rotation inférieure à une vitesse de rotation n' de changement de mode,

- et à partir de la séquence d'impulsions rectangulaires (ASR) pour une vitesse de rotation n supérieure à la vitesse de rotation n' de changement de mode,

- la vitesse de rotation n' de changement de mode étant supérieure à 1 tour/min, de préférence de 20 tours/min.

2. Procédé selon la revendication 1, caractérisé en ce que le capteur de Hall est équipé de plusieurs cellules de Hall, qui sont respectivement activées conformément à la vitesse de rotation n existante.

3. Procédé selon la revendication 1 ou 2, caractérisé en ce que au moins deux signaux de tension de Hall (UH1, UH11), dont la différence de signaux est utilisée au lieu du signal de différentiation DF, sont engendrés à partir de deux cellules de Hall (1, 11).

**4.** Procédé selon la revendication 1, caractérisé en ce que les niveaux (FS1, FS2) présentent chacun une demi largeur d'impulsion (THTB1, THTB2) qui s'écarte d'environ ± 0,1 à 10%, de préférence de 3%, de la transition respective (UBG1, UBG2) des niveaux (AFL, ASH) de l'impulsion rectangulaire (ASR).

**5.** Procédé selon l'une des revendications 1 à 4, caractérisé en ce que le signal de valeur de seuil (DC-TH) est formé par une fenêtre de commutation fixe (SF), autour de laquelle le profil de tension de Hall de la densité de flux magnétique (B1) de la dent (Z1; Z11, ..., Z14) et de l'entredent (ZL1; ZL11, ..., Z14) est établi d'une manière telle que la valeur inférieure de tension de Hall (UHZmin) de la dent (Z1; Z11, ..., Z14) forme le niveau de tension supérieur (UHFH) et que la valeur supérieure de tension de Hall (UHZmax) de l'entredent (ZL1; ZL11, ..., ZL14) forme le niveau de tension inférieur (UHFL) de la fenêtre de commutation (SF).

**6.** Procédé selon l'une des revendications 1 à 4, caractérisé en ce que la fenêtre de commutation (SF) du signal de valeur de seuil (DC-TH) est établie par une résistance d'ajustement d'une manière telle que le niveau supérieur de tension (UHFH) de la fenêtre de commutation (SF) est approché de la valeur inférieure de tension (UHZmin) de la dent (Zl; Z11, ..., Z14) et que le niveau inférieur de tension (UHFL) de cette fenêtre (SF) est approchée de la valeur inférieure de tension (UHZmax) de l'entredent (ZL1; ZL11, ..., ZL14) lorsque le profil (U) de tension de Hall de la densité de flux magnétique (B1) de la dent (Z1; Z11, ..., Z14) est fixe.

**7.** Dispositif de détection de la position angulaire d'un arbre tournant qui comprend

- une roue à impulsions (4, 4.1, 4.2) qui peut être reliée à un arbre et qui comporte au moins une dent (Zl; Z11, ..., Z14) qui présente un flanc de dent montant et un flanc de dent descendant (ZFA, ZFF) et un entredent (ZL1; ZL11, ..., ZL14);

- une unité de capteur de Hall comportant au moins une cellule de Hall (1, 11) devant laquelle la roue d'impulsions (4, 4.1, 4.2) est agencée à rotation et

- un circuit dynamique de sélection (3) qui est relié à au moins une des cellules de Hall (1), caractérisé en ce que

  une unité (5) de signaux à fenêtres et une unité de sortie d'arrêt (2), en aval desquelles est raccordé un circuit de sortie (6), sont montées en parallèle au circuit de sélection dynamique (3), la première cellule de Hall (1) étant reliée à une première entrée de l'unité (5) de signaux de fenêtre dont la sortie est amenée au circuit de sortie (6),

l'unité (2) de sortie d'arrêt recevant à sa première entrée un signal de valeur de seuil (DC-TH) et étant reliée à sa deuxième entrée à la première cellule de Hall (1) et sa sortie étant reliée au circuit de sortie (6), la sortie du circuit dynamique de sortie (3) étant agencée au circuit de sortie (6).

**8.** Dispositif selon la revendication 7, caractérisé en ce qu'une deuxième cellule de Hall (11) est agencée à une deuxième entrée de l'unité (5) de signaux de fenêtres.

**9.** Dispositif selon la revendication 7 ou 8, caractérisé en ce que l'unité (5) de signaux de fenêtre est en même temps une unité de sortie statique.

**10.** Dispositif selon l'une des revendications 7 à 9 caractérisé en ce que l'unité (5) de signaux de fenêtre se compose d'un circuit en série comprenant un circuit (5.1) de fenêtre et un comparateur (5.2) de fenêtre, la première unité (1) de capteur de Hall étant reliée à la première entrée du circuit (5.1) de fenêtre et la deuxième unité (11) de capteur de Hall étant reliée à la deuxième entrée de ce même circuit, et la sortie du comparateur (5.2) de fenêtre étant reliée au circuit de sortie (6).

**11.** Dispositif selon l'une des revendications 7 à 10, caractérisé en ce que le circuit de fenêtre (5.1) se compose d'un comparateur triple (5.1.1) et d'un additionneur (1.2), la première unité (1) de capteur de Hall étant reliée à la première entrée du comparateur triple, la deuxième unité (11) de capteur de Hall étant reliée à la deuxième entrée de ce comparateur et une alimentation en courant (7) étant raccordée à sa troisième entrée, et les sorties du comparateur triple (5.1.1) étant reliées aux trois entrées de l'additionneur (5.1.2) dont la sortie est amenée au comparateur (5.2) de fenêtre et au circuit de sortie (6).

**12.** Dispositif selon l'une des revendications 7 à 11, caractérisé en ce que le circuit de sortie (6) se compose d'un circuit logique de décision (6.1) et d'une unité de sortie (6.2) montée en aval de celui-ci, la première entrée du circuit logique de décision (6.1) étant reliée à la sortie du circuit de fenêtre (5.2), la deuxième entrée de ce circuit logique étant reliée à la sortie du circuit de sélection dynamique (3) et la troisième entrée du circuit logique étant reliée à la sortie de l'unité de sortie (2) d'arrêt, et le signal de sortie de position (AS1) étant disponible à la sortie
de l'unité de sortie (6.2).

13. Dispositif selon l'une des revendications 7 à 12, caractérisé en ce que l'unité de sortie d'arrêt est un
comparateur (2).

Fig.1

fig-2

Fig. 3

VII B

1

11

K2

K1

Z1

ZFF

ZFA

ZL1

4.1

K3

K4

VII B

*Fig. 4 a*

1

11

K2

Z1

200

ZL1

K4

*Fig. 4 b*

*Fig. 5*

Fig. 6a

EP 0 745 212 B1

Fig. 6b

$U_H[mV]$

45

40

35

30

25

0    0,5    1,0    1,5    2,0    2,5    3,0    $s\,[mm]$

$U_{HZ\,min}$

DC-TH

SF

$U_{HZ}$

$U_{HFH}$

$U_{HFL}$

$U_{HZL}$

$U_{HZL\,MAX}$

*fig. 7*

Fig. 8a

EP 0 745 212 B1

Fig. 8b

Fig. 8c

Fig. 8d